# EUROPÄISCHE PATENTANMELDUNG

(11) **EP 4 462 339 A1**
(43) Veröffentlichungstag der Anmeldung: **13.11.2024**
(21) Anmeldenummer: 23172573.0
(22) Anmeldetag: 10.05.2023
(51) Int. Cl.: G06Q 30/02, G06F 16/957

(54) **TECHNIKEN ZUR IDENTIFIKATION VON COOKIE-BANNERN**

(71) Anmelder: Deutsche Telekom AG, 53113 Bonn (DE)
(72) Erfinder: Kloth, Mathias, 51429 Bergisch Gladbach (DE); LIPPMANN, Nico, 32351 Stemwede (DE)
(74) Vertreter: Braun-Dullaeus Pannen Emmerling Patent- & Rechtsanwaltspartnerschaft mbB

(57) **Zusammenfassung**

Die vorliegende Erfindung betrifft Techniken zur Identifikation von Cookie-Bannern von zumindest einer Internetseite umfassend die folgenden Schritte:
• Aufrufen der Internetseite vermittels einer Internet-Zugangsschnittstelle;
• Einholen von Informationen, wobei die Informationen eine Darstellung der Internetseite auf einem Bildschirm wiedergeben;
• Analyse der Informationen im Hinblick auf das Vorhandensein eines Cookie-Banners, wobei die Analyse einen Score ausgibt, der wiedergibt mit welcher Wahrscheinlichkeit ein Cookie-Banner auf der Internetseite vorhanden ist;
• Feststellung, dass die Internetseite einen Cookie-Banner aufweist, wenn der Score über einem Grenzwert liegt.

## Beschreibung

Die vorliegende Erfindung betrifft das technische Gebiet zur Identifikation von Cookie-Bannern. Insbesondere betrifft die Erfindung ein entsprechendes Verfahren, einen Browser, ein System und/oder ein Computerprogramm-Produkt.

Ein Cookie ist eine Textinformation, die im Browser auf dem Endgerät des Betrachters (Computer, Laptop, Smartphone, Tablet usw.) jeweils zu einer besuchten Website (Webserver, Server) gespeichert werden kann. Das Cookie wird entweder vom Webserver an den Browser gesendet oder im Browser von einem Skript (JavaScript) erzeugt. Der Webserver kann bei späteren, erneuten Besuchen dieser Seite diese Cookie-Information direkt auslesen oder über ein Skript der Website die Cookie-Information an den Server übertragen.

Aufgabe dieses Cookies ist beispielsweise die Identifizierung des Surfers (Session ID), das Abspeichern eines Logins bei einer Webanwendung wie Wikipedia, Facebook usw. oder das Abspeichern eines Warenkorbs bei einem Online-Händler. Ein häufiger Einsatzzweck ist das Webtracking von Nutzern mit speziell präparierten Seiten. Die Verwendung von Cookies zur Analyse des Nutzungsverhaltens und für Werbezwecke erfordert die Einwilligung des Nutzers.

Der Begriff Cookie wird im Datenschutz auch als Synonym für Datenentnahme, Datenspeicherung, Datennutzung, Datenverwertung, Datenweitergabe wie auch Datenmissbrauch verwendet, unabhängig davon, ob dazu tatsächlich ein physisches Cookie verwendet wird oder andere Techniken eingesetzt werden.

Im Zusammenhang mit dem Datenschutz existiert die sogenannte E-Privacy Richtlinie - gemeinhin auch unter dem Namen "Cookie Richtlinie" bekannt - wobei Nutzer innerhalb der EU dieser Richtlinie zustimmen müssen, damit sogenannte (Tracking-) Cookies verwendet werden dürfen. Realisiert wird dies in fast allen Fällen über sogenannte Cookie-Banner. Vermittels dieser Cookie-Banner können die Nutzer der Verwendung der Cookies zustimmen, die Verwendung ablehnen oder eventuell individuell konfigurieren, welche Cookies verwendet werden dürfen. Wird eine Internetseite in der EU angeboten und besteht keine Möglichkeit, wie vorstehend beschrieben, den Cookies zuzustimmen, diese abzulehnen oder diese zu konfigurieren, kann der Betreiber der entsprechenden Internetseite hierfür rechtlich haften.

Insbesondere für große Unternehmen, die eine Vielzahl von Internetseiten betreiben, ist es nicht immer einfach, alle Internetseiten entsprechend auf dem aktuellen Stand zu halten. Sei es durch fehlendes Asset Management oder fehlende vorhandene Update-Mechanismen. Aber selbst falls die beiden vorgenannten Option vorhanden sind, ist das ganze Verfahren dennoch sehr aufwendig und fehleranfällig.

Aus dem Stand der Technik bekannt sind, dass Mitarbeiter die Internetseiten manuell im Hinblick auf das Vorhandensein der Cookie-Banner überprüfen.

Nachteilig an dem obigen Stand der Technik ist die Fehleranfälligkeit und der hohe Aufwand von Manpower.

Dementsprechend ist es die Aufgabe der Erfindung, Techniken bereitzustellen, die es effizient ermöglichen, dass Betreiber von Webseiten Datenschutzvorgaben im Hinblick auf Cookies einhalten.

Erfindungsgemäß ist ein Verfahren zur Identifikation von Cookie-Bannern von zumindest einer Internetseite umfassend die folgenden Schritte angegeben:
- Aufrufen der Internetseite vermittels einer Internet-Zugangsschnittstelle;
   o die Internet-Zugangsschnittstelle ist insbesondere ein Browser, der auf einem UE, also insbesondere einem Computer, einem Smartphone oder einem Tablet installiert sein kann; insbesondere, wenn Unternehmen eine Vielzahl von Internetseiten verwalten, kann der Aufruf automatisiert durch ein entsprechendes Skript ausgeführt werden, wobei das Skript hierbei auf eine Datenbank zurückgreifen kann, in der bevorzugt alle von dem Unternehmen verwalteten Internetseiten aufgelistet sind;
   ∘ das Aufrufen der Internetseite kann dadurch realisiert werden, dass die Adresse der Internetseite, insbesondere automatisiert, in den Browser des UEs eingegeben wird; also beispielsweise www.telekom.de; der Server auf dem die Internetseite gehostet wird überträgt dann entsprechende Protokolldaten, insbesondere in der Form eines HTML-Daten, an das UE, sodass die Internetseite auf dem UE darstellbar ist; die Protokolldaten weisen insbesondere alle notwendigen Informationen zur Darstellung der Internetseite auf;
- Einholen von Informationen, wobei die Informationen eine Darstellung der Internetseite auf einem Bildschirm wiedergeben;
   ∘ die Informationen können insbesondere direkt aus den HTML-Daten extrahiert werden und/oder indem die "tatsächliche" visuelle Darstellung der Internetseite erfasst wird, insbesondere durch eine Bild- oder Videoaufzeichnung der Internetseite auf einem Bildschirm;
   ∘ im Falle, dass die Informationen aus der tatsächlichen visuellen Darstellung der Internetseite extrahiert werden, können die Daten so lange aufgezeichnet werden, bis die Internetseite vollständig geladen ist; dass eine Internetseite vollständig geladen ist, kann dadurch festgestellt werden, dass sich deren visuelle Darstellung nicht mehr verändert und/oder dass die übertragene Datenrate sprunghaft absinkt. Alternativ kann auch für ein bestimmtes Zeitfenster gewartet werden, nach dem davon ausgegangen werden kann, dass die Internetseite komplett geladen ist. Dieses Zeitfenster kann insbesondere eine Funktion der verfügbaren Bandbreite sein;
   ∘ die Aufzeichnung der visuellen Darstellung in Form von Bildern, beispielsweise Screenshots, oder eine Videoaufzeichnung des dargestellten Bildschirms beginnt vorzugsweise zeitgleich mit dem Aufruf der Webseite;
   ∘ die HTML-Daten können beispielsweise einem Algorithmus, der die nachstehend beschriebene Analyse ausführt, über eine entsprechende Schnittstelle direkt zugänglich gemacht werden. Im Prinzip ist es auch möglich, aus den HTML-Daten direkt das visuelle Erscheinungsbild der Internetseite zu rekonstruieren, ohne dass diese extra hierfür auf einem Bildschirm angezeigt werden muss; in der Variante, dass die Internetseite tatsächlich auf einem Bildschirm angezeigt wird, sind entsprechende Tools vorhanden, um Screenshots oder Videoaufnahmen der Darstellung der Internetseite auf dem Bildschirm anfertigen zu können;
- Analyse der Informationen im Hinblick auf das Vorhandensein eines Cookie-Banners, wobei die Analyse einen Score ausgibt, der wiedergibt mit welcher Wahrscheinlichkeit ein Cookie-Banner auf der Internetseite vorhanden ist;
   ∘ um den Cookie-Banner anzeigen zu können, müssen entsprechende Daten in den HTML-Daten vorhanden sein, die bewirken, dass der Cookie-Banner auf dem Bildschirm angezeigt wird und/oder der Cookie-Banner ist direkt in der Darstellung der Internetseite auf dem Bildschirm sichtbar, was natürlich die Voraussetzung dafür ist, dass ein Nutzer den Cookie-Banner beim Besuchen der Internetseite wahrnehmen kann;
   ∘ vor allem im Hinblick auf die grafische Darstellung der Cookie-Banner beim Anzeigen der Internetseite existieren zahlreiche grafische Varianten von Cookie-Bannern, da die Darstellung von Cookie-Bannern nicht standardisiert ist. Aus diesem Grund müssen die Informationen im Hinblick darauf untersucht werden, ob es sich bei bestimmten Darstellungen um einen Cookie-Banner handelt oder nicht. Zu diesem Zweck wird als Ergebnis der Analyse der Score ausgegeben, der wiedergibt mit welcher Wahrscheinlichkeit ein Cookie-Banner auf der Internetseite vorhanden ist oder nicht;
- Feststellung, dass die Internetseite einen Cookie-Banner aufweist, wenn der Score über einem Grenzwert liegt.
   ∘ Das Ergebnis, also die Feststellung, ob die Internetseite ein Cookie-Banner aufweist oder nicht kann dem Betreiber der Internetseite und/oder dem Nutzer (der die Internetseite aufruft) mitgeteilt werden. Der Cookie-Banner gilt demnach als vorhanden, wenn der Grenzwert überschritten wird.

Die Schritte des Verfahrens können insbesondere automatisiert auf dem UE oder einer anderen Rechnereinheit durchgeführt werden. Hierdurch wird also ermöglicht, dass beispielsweise einem Unternehmen auf effiziente Weise ein Überblick bereitgestellt werden kann, welche seiner Internetseiten über ein Cookie-Banner verfügen und somit rechtskonform sind und welche nicht. Im Vergleich zu dem bisherigen manuellen Verfahren, ist das erfindungsgemäße Verfahren deutlich effizienter und weniger fehleranfällig und kann einfach regelmäßig durchgeführt werden.

In einer Ausführungsform umfassen die Informationen HTML-Daten zum Seitenaufbau (insbesondere HTML-Protokolldaten) und/oder eine visuelle Anzeige der Internetseite. Bei der visuellen Anzeige kann es sich auch um eine virtuelle Anzeige in der Art handeln, dass basierend auf den HTML-Protokolldaten bestimmbar ist, wie die visuelle Anzeige der Internetseite auf einem Bildschirm aussehen würde, ohne diese tatsächlich auf einem Bildschirm darzustellen. Die tatsächliche Darstellung der Internetseite auf dem Bildschirm ist allerdings eine weitere Option.

Dies hat den Vorteil, dass sowohl die HTML-Protokolldaten als auch die visuelle Anzeige der Internetseite dazu geeignet sind, festzustellen, ob die Internetseite ein Cookie-Banner verwendet. Insbesondere können die Informationen der HTML-Protokolldaten als auch der visuellen Anzeige bezüglich der Feststellung, ob ein Cookie-Banner angezeigt wird miteinander kombiniert verwendet werden. Ein weiterer Vorteil ist, dass sowohl die HTML-Protokolldaten als auch das visuelle Anzeigen der Internetseite ohnehin beim Aufruf eine Internetseite verwendet werden, sodass keine Modifikationen bei dem Server der die Website hostet beim Aufruf der Internetseite vorgenommen werden müssen.

In einer bevorzugten Ausführungsform löscht und/oder blockiert die Internet-Zugangsschnittstelle automatisiert schon durch die Internetseite erfasste Cookies, wenn die Internetseite keinen Cookie-Banner aufweist.

Dies hat den Vorteil für einen Nutzer, dass sein Datenschutz automatisiert sichergestellt wird, selbst wenn der Nutzer eine Internetseite besucht, die keinen Cookie-Banner aufweist und die demnach nicht die Möglichkeit bietet, die Verwendung von Cookies abzulehnen. Die Cookies können hierbei innerhalb der Internet-Zugangsschnittstelle selbst automatisiert gelöscht werden.

Vorzugsweise wird einem Unternehmen, das die Internetseite betreibt automatisiert signalisiert, wenn die Internetseite keinen Cookie-Banner aufweist, wobei auf einem Server, der die Internetseite verwaltet, ein Algorithmus implementiert hat, der die Internetseite automatisiert abschaltet oder automatisiert einen Cookie-Banner hinzufügt.

Dies hat den Vorteil, dass das Unternehmen schnell auf den fehlenden Cookie-Banner reagieren kann und hierdurch vermieden wird, dass das Unternehmen zumindest weitere datenrechtliche Verstöße zu verantworten hat. Datenschutz für die Nutzer der Internetseite wird hierdurch gewährleistet. Bei dem automatisiert hinzugefügten Cookie-Banner, kann es sich insbesondere um einen Standard Cookie-Banner handeln, der zunächst einmal Mindestanforderungen des Datenschutzes genügt, der aber in einem späteren Prozess noch durch einen auf die Internetseite individuell angepassten Cookie-Banner ersetzt werden kann. Insbesondere kann der Standard Cookie-Banner die beiden Möglichkeiten aufweisen alle Cookies zu akzeptieren oder alle Cookies abzulehnen.

In einer bevorzugten Ausführungsform wird das Blockieren, das Löschen und/oder das Signalisieren nicht ausgeführt, wenn es sich bei den Cookies um essenzielle Cookies handelt, wobei die Art der Cookies anhand der HTML-Daten extrahiert wird. Essenzielle Cookies können beispielsweise in einer Datenbank abgelegt werden, sodass die extrahierten Cookies mit diesen in der Datenbank verglichen werden können.

Vorteilhaft wird hierdurch die Tatsache berücksichtigt, dass nicht in jedem Fall ein Cookie-Banner für eine Internetseite verwendet werden muss. Sofern auf der Internetseite nur Cookies eingesetzt werden, die für den technischen Betrieb der Webseite unabdingbar sind, benötigt die Internetseite keinen Cookie-Banner. Gleichwohl muss in der Datenschutzerklärung über die Verwendung und die Funktionsweise technisch notwendiger Cookies informiert werden. Sobald ein Websitebenutzer als unique-User identifiziert werden kann, greift die DSGVO und eine Einwilligung muss durch ein Cookie-Banner eingeholt werden.

Bevorzugt unterscheiden die Informationen der visuellen Anzeigen, die der Analyse zugänglich gemacht werden, zumindest folgende Fälle unterscheiden:
- keine visuelle Veränderung der Internetseite, wobei in diesem Fall der komplette visuelle Bereich der Analyse zugänglich gemacht wird;
   ∘ insbesondere ist hierbei zu verstehen, dass keine visuelle Änderung der Internetseite mehr stattfindet, nachdem diese vollständig geladen wurde. Aufgrund einer fehlenden visuellen Veränderung kann diese Eigenschaft nicht dazu genutzt werden, um Aussagen hierüber zu treffen, welcher Bereich für die Analyse im Hinblick auf das Cookie-Banner besonders bevorzugt ist. Aus diesem Grund wird der komplette visuelle Bereich der Analyse zugänglich gemacht; In diesem Fall ist also die ganze Seite eine Fokus-Region. Unter Fokus Region wird der "grafische Ausschnitt" verstanden, der der Analyse zugänglich gemacht wird;
- ein grafisches Element, dass beim Scrollen der Internetseite an seinem ursprünglichen Ort der Darstellung verbleibt; insbesondere das verbleibende grafische Element wird der Analyse im Hinblick auf das Vorhandensein eines Cookie-Banners zugänglich gemacht und kann insbesondere als Fokus-Region gespeichert werden;
   ∘ es ist eine Besonderheit von Cookie-Bannern, dass diese in einer Art auf der Internetseite dargestellt werden, dass, wenn die Internet Seite nach oben bzw. unten gescrollt wird, sich die Anzeige der Internetseite zwar im Hintergrund durch das Scrollen verändert, wohingegen der Cookie-Banner unverändert an seinem Ort im Vordergrund verbleibt; man könnte auch sagen, der Cookie-Banner wandert gewissermaßen beim scrollen mit;
- ein einzelnes sich visuell veränderndes Element, wobei in diesem Fall das einzelne sich visuelle verändernde Element der Analyse zugänglich gemacht wird; und/oder
   o dies hat den Hintergrund, dass es sich bei diesem Element mit einer hohen Wahrscheinlichkeit um den Cookie-Banner handelt;
- ständig sich verändernde visuelle Elemente, wobei in diesem Fall die ständig sich verändernde visuelle Elemente für die Analyse nicht berücksichtigt werden.
   ∘ verändert sich ein Element ständig visuell, handelt es sich mit hoher Wahrscheinlichkeit beispielsweise um ein Video, eine Werbeeinblendung und/oder ein GIF, welches in vorteilhafter Weise nicht für die Analyse, ob ein Cookie-Banner vorhanden ist, berücksichtigt wird.

In vorteilhafter Weise erfüllen die vorgenannten Fälle eine Art Filterfunktion, die die Informationen, die der Analyse zugänglich gemacht werden in einer Art und Weise aufbereiten, dass die Informationen gewissermaßen von Daten oder Bildern bereinigt werden, die nicht in einem Zusammenhang mit einem Cookie-Banner stehen. Hierdurch wird die Anzahl der falsch positiv erkannten Cookie-Bannern reduziert. Gerade für den Betreiber der Internetseite ist von Vorteil, dass falsch positive Ergebnisse reduziert werden, da der Betreiber in diesem Fall durch die Analyse der Meinung ist, dass für die entsprechende Internetseite kein Handlungsbedarf besteht, um den Datenschutzrichtlinien zu genügen. Zusätzlich reduzieren die vorgenannten Fälle die Datenmenge, die von der Analyse verarbeitet werden muss.

In einer Ausführungsform wird die Analyse der Informationen der visuellen Anzeige im Hinblick auf das Vorhandensein eines Cookie-Banners mit einer trainierten künstlichen Intelligenz durchgeführt wird.

Dies hat den Vorteil, dass sich eine künstliche Intelligenz in Form eines neuronalen Netzwerks besonders gut zur Mustererkennung eignet und im Vorfeld mit entsprechenden Trainingsdaten trainiert werden kann, um einen Score ausgeben zu können, der besagt mit welcher Wahrscheinlichkeit ein Cookie-Banner festgestellt wurde. Das neuronale Netzwerk wird hierbei wie folgt trainiert: Dem neuronalen Netzwerk werden als Trainingsdaten Bilder von Internetseite übergeben, die ein Cookie-Banner aufweisen, wobei dieser Satz an Trainings-Inputdaten mit "Cookie-Banner: ja" gekennzeichnet wird; zudem werden dem neuronalen Netzwerk als weitere Trainings-Inputdaten auch noch Bilder von Internetseiten übergeben, die keinen Cookie-Banner aufweisen, wobei diese Daten dieser Satz an Inputdaten mit "Cookie-Banner: nein" gekennzeichnet wird. Je mehr dieser Daten dem neuronalen Netzwerk übergeben werden, desto besser funktioniert die Mustererkennung im Hinblick auf Cookie-Banner. Es kann vorteilhaft sein, dem neuronalen Netzwerk zu Trainingszwecken gleichviel Datensätze mit und ohne Cookie-Banner zu übergeben. Zusätzlich kann die Analyse umfassen, dass die Anzeige der Webseite eine OCR Analyse durchläuft, wobei die durch die OCR Analyse ermittelten Wörter mit Schlagwörten verglichen werden, die auf ein Cookie-Banner hindeuten. Die OCR Analyse kann zur Berechnung des Scores miteinfließen.

Vorzugsweise umfasst die künstliche Intelligenz mehrere trainierte KI-Module, wobei die verschiedenen KI-Module jeweils mit spezifischen Cookie-Bannern verschiedener Unternehmen trainiert sind. Wie ein Cookie-Banner grafisch dargestellt wird, ist nicht standardisiert. So ist es für ein Unternehmen, das ein Cookie-Banner beispielsweise nach eigenen spezifischen Kriterien grafisch gestaltet, von Vorteil, wenn das neuronale Netzwerk des entsprechenden KI-Moduls nur mit den entsprechenden spezifischen Cookie-Bannern zu trainieren, damit diese zielgerichteter erkannt werden können.

Um aber auch den Fall abzudecken, dass dieses Unternehmen ein "anderes" nichtspezifisches Design für einen seiner Cookie-Banner verwendet, können beispielsweise mehrerer KI-Module für die Analyse verwendet werden, wobei für die Analyse beispielsweise zuerst eine erstes KI-Modul basierend auf den spezifischen Cookie-Bannern des Unternehmens verwendet werden kann, wobei in dem nachfolgenden Prozess ein zweites KI-Modul verwendet wird, dass mit verschiedenartigen Cookie-Bannern trainiert wurde. Das zweite KI-Modul ist dann in diesem Sinne ein generisches Cookie-Banner Erkennungs-Kl-Modul. Die Reihenfolge ist deshalb besonders effizient, da die Analyse bei dem Auffinden eines Cookie-Banners nach dem ersten KI-Modul basierend auf den spezifischen Cookie-spannen bei Überschreitung eines bestimmten Score schon abgebrochen werden kann.

Es hat sich gezeigt, dass die Feststellung aufgrund der Informationen in den HTML-Daten im Hinblick auf das Vorhandensein eines Cookie-Banners zu vielen falsch-positiven Resultaten führen würde, die wie vorstehend beschrieben, vermieden werden sollen. Allerdings können die Informationen aus den HTML-Daten mit der vorstehend beschriebenen Analyse der grafischen Anzeige der Internetseite mithilfe der trainierten künstlichen Intelligenz in bestimmten Fällen kombiniert werden, um eine Aussage hierüber treffen zu können, ob die Internetseite einen Cookie-Banner anzeigt oder nicht. Dies ist insbesondere dann der Fall, wenn der durch die künstliche Intelligenz ausgegebene Score nur "wenig" unter dem Grenzwert liegt. In diesem Fall könnte es sich beispielsweise um einen Cookie-Banner mit einer neuartigen grafischen Darstellung handeln, der noch nicht sicher zugeordnet werden kann.

Die HTML-Daten können also im Hinblick auf das Vorhandensein eines Cookie-Banners analysiert werden, wenn der Score des Kl-Modells in einem festlegbaren Bereich unterhalb des Grenzwertes ist. Wird also beispielsweise festgelegt, dass der Grenzwert 0,9 ist, so kann festgelegt werden, dass der festlegbare Bereich zwischen 0,75 und 0,9 liegt. Realisiert werden kann dies dadurch, indem die HTML-Daten im Hinblick auf Schlagwörter untersucht werden, die im Zusammenhang mit einem Cookie-Banner stehen. Diese Schlagwörter können wiederum in einer Datenbank hinterlegt sein.

In einer Ausführungsform ist der Grenzwert und/oder der festlegbare Bereich anpassbar. Dies bietet den Vorteil, dass beispielsweise das Unternehmen und/oder den Nutzer selbst entscheiden können, die sensitiv das Verfahren im Hinblick auf eine Erkennung-Bannern. Je höher der Grenzwert angesetzt wird, desto geringer ist die Anzahl der falsch-positiven Ergebnisse der Analyse.

Gemäß einem zweiten Aspekt der Erfindung ist eine Internet-Zugangsschnittstelle angegeben, die zur Ausführung der Schritte des vorgenannten Verfahrens eingerichtet ist. Die Internet-Zugangsschnittstelle weist insbesondere entsprechende Schnittstellen auf um die Daten der Internetseite, wie die HTML-Daten zum Seitenaufbau, empfangen zu können. Zur Ausführung der Analyse kann die Internet-Zugangsschnittstelle über entsprechende Schnittstellen auf einem Prozessor eines UEs zurückgreifen.

Dies hat den Vorteil, dass diejenige funktionale Einheit, nämlich die Internet-Zugangsschnittstelle, die der Nutzer ohnehin zum Seitenaufbau verwendet, gleichzeitig überprüft und/oder sicherstellt, dass datenschutzrechtliche Vorgaben eingehalten werden.

In einer Ausführungsform ist die Internet-Zugangsschnittstelle als ein Browser ausgebildet. Insbesondere ist die Funktionalität zum Ausführen der Schritte des Verfahrens nach dem vorstehend beschriebenen Verfahren durch ein Browser Plug-In realisiert.

Dies bietet den Vorteil, dass auch schon existierende Browser einfach durch das Plug-In angepasst werden können, um das erfindungsgemäße Verfahren auszuführen.

Gemäß einem dritten Aspekt der Erfindung ist eine Rechnereinheit angegeben aufweisend die vorstehend angegebener Internet-Zugangsschnittstelle und eingerichtet zur Ausführung der Schritte des Verfahrens vorstehend beschriebenen Verfahrens.

Die Rechnereinheit kann beispielsweise ein Server, ein Computer, ein Smartphone oder ein Tablet sein. Insbesondere für den Computer, das Smartphone oder das Tablett kann auch der Begriff UE (user equipment) verwendet werden. Alle diese genannten Rechnereinheiten sind in der Regel entsprechend eingerichtet, um Internetseiten aufrufen zu können.

Gemäß einem vierten Aspekt der Erfindung ist ein Computerprogramm angegeben, umfassend Befehle, die bei der Ausführung des Programms durch eine Rechnereinheit diese veranlassen, das Verfahren auszuführen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt schematisch das erfindungsgemäße Verfahren;
- Fig. 2:: zeigt eine IT-Umgebung zur Ausführung des Verfahrens nach Fig. 1;
- Fig. 3:: trainierte Künstliche Intelligenz zum Erkennen von Cookie-Bannern;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

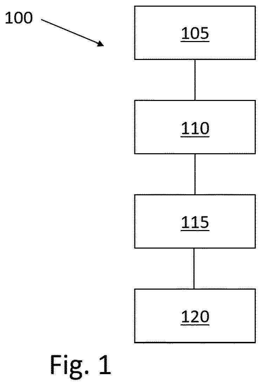

Fig. 1 zeigt schematisch das erfindungsgemäße Verfahren 100 zur Identifikation von Cookie-Bannern von zumindest einer Internetseite umfassend die folgenden Schritte:
Schritt 105: Aufrufen der Internetseite vermittels einer Internet-Zugangsschnittstelle;
Schritt 110: Einholen von Informationen, wobei die Informationen eine Darstellung der Internetseite auf einem Bildschirm wiedergeben;
Schritt 115: Analyse der Informationen im Hinblick auf das Vorhandensein eines Cookie-Banners, wobei die Analyse einen Score ausgibt, der wiedergibt mit welcher Wahrscheinlichkeit ein Cookie-Banner auf der Internetseite vorhanden ist;
Schritt 120: Feststellung, dass die Internetseite einen Cookie-Banner aufweist, wenn der Score über einem Grenzwert liegt.

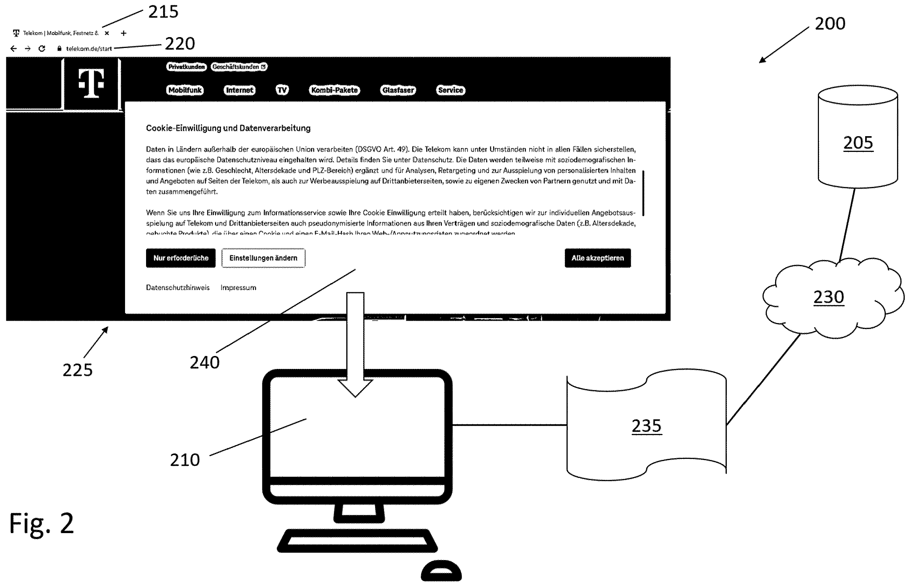

Fig. 2 zeigt eine IT-Umgebung 200 zur Ausführung des Verfahrens 100 nach Fig. 1.

Fig. 2 zeigt einen Server 205, der eine Internetseite 225 für Nutzer bereitstellt. Der Nutzer kann vermittels seiner Recheneinheit 210 in seinen Browser 215 eine Internet-Adresse 220 der Internetseite 225 eingeben. Die Anfrage wird dann an den Server 205 gesendet, der über das Internet 230 Daten 235 zum Seitenaufbau, insbesondere HTML-Daten 235, an die Recheneinheit 210 sendet, wobei die Daten 235 zum Seitenaufbau an den Browser 215 übergeben werden.

Im Fall von Fig. 2 wird beim Seitenaufbau ein Cookie-Banner 240 angezeigt, sodass der Betreiber der Internetseite den Datenschutzrichtlinien genügt. Es kommt jedoch auch vor, dass der Cookie-Banner 240 nicht angezeigt wird, wobei der Betreiber der Internetseite in diesem Fall gegen die Datenschutzrichtlinien verstoßen würde.

In diesem Fall ist die IT-Umgebung 200 zur Ausführung des Verfahrens 100 eingerichtet, sodass automatisiert entdeckt werden kann, ob eine Internetseite einen Cookie-Banner anzeigt oder nicht.

In einer speziellen Ausführungsform kann das Verfahren vorsehen, dass die Internetseite 225, insbesondere automatisiert, besucht wird, wobei der Prozess des Aufbaus der Internetseite 225, insbesondere in der Ausgestaltung einer Bildschirmaufzeichnung, erfasst wird. Diese erfassten Informationen können dann einer trainierten künstlichen Intelligenz 300 zum Erkennen von Cookie-Bannern zugänglich gemacht werden, die die Internetseite 225 dahingehend analysiert, ob ein Cookie-Banner vorhanden ist oder nicht.

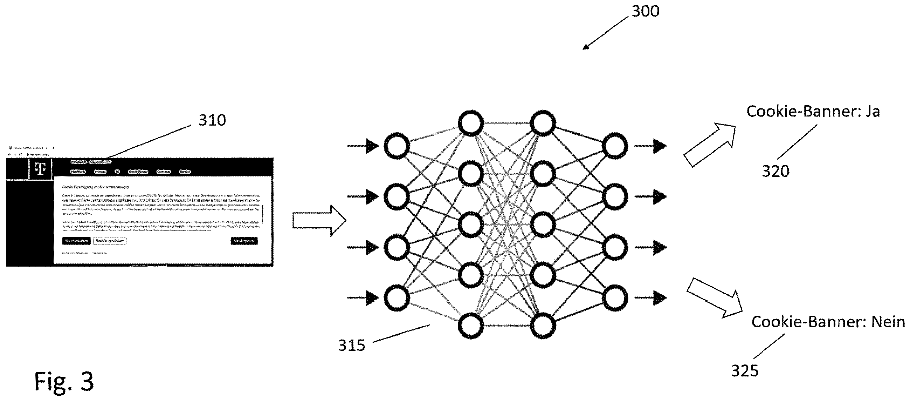

Fig. 3 zeigt eine Möglichkeit, die künstliche Intelligenz 300, die bevorzugt auf einem neuronalen Netzwerk 315 beruht, zu trainieren. Der künstlichen Intelligenz 300 können als Inputdaten beispielsweise Screenshots 310 und/oder Videoaufzeichnungen 310 von Internetseiten übergeben werden, die entweder einen Cookie-Banner aufweisen oder nicht. Das Training der künstlichen Intelligenz 300 kann dann dergestalt sein, dass beispielsweise ein Fachmann markiert, ob die Inputdaten einen Cookie-Banner aufgewiesen haben "Cookie-Banner: ja 320" oder eben nicht "Cookie-Banner: Nein 325".

In einer Ausführungsform der Erfindung wird demnach in einem ersten Schritt eine Videoaufzeichnung gestartet. In einem zweiten Schritt wird der Browser 215 automatisiert gestartet und die zu überprüfende Internetseite 225 aufgerufen. Es ist insbesondere auch möglich den ersten und den zweiten Schritt gleichzeitig auszuführen. Während des Aufrufs der Internetseite 225 wird der aktuelle Seiteninhalt (HTML-Content) durchgehend mit dem dazugehörigen Zeitstempel protokolliert.

Nachdem die Internetseite 225 vollständig geladen und eine definierte Wartezeit vorüber ist, wird die Videoaufzeichnung und die Protokollierung des Seiteninhalts gestoppt. In einem weiterhin Schritt können dann die Änderungen des Seiteninhalts über die Zeit hinweg extrahiert und gespeichert werden.

Bei den Screenshots und/oder den Videoaufnahmen der jeweiligen Internetseite 225 können vier Fälle unterschieden werden:
- keine visuelle Veränderung der Internetseite, wobei in diesem Fall der komplette visuelle Bereich der Analyse zugänglich gemacht wird;
   o insbesondere ist hierbei zu verstehen, dass keine visuelle Änderung der Internetseite mehr stattfindet, nachdem diese vollständig geladen wurde. Aufgrund einer fehlenden visuellen Veränderung kann diese Eigenschaft nicht dazu genutzt werden, um Aussagen hierüber zu treffen, welcher Bereich für die Analyse im Hinblick auf das Cookie-Banner besonders bevorzugt ist. Aus diesem Grund wird der komplette visuelle Bereich der Analyse zugänglich gemacht;
- ein grafisches Element, dass beim Scrollen der Internetseite an seinem ursprünglichen Ort der Darstellung verbleibt; insbesondere das verbleibende grafische Element wird der Analyse im Hinblick auf das Vorhandensein eines Cookie-Banners zugänglich gemacht;
   ∘ es ist eine Besonderheit von Cookie-Bannern, dass diese in einer Art auf die Internetseite dargestellt werden, dass wenn die Internet Seite nach oben bzw. unten gescrollt wird, sich die Anzeige der Internetseite zwar im Hintergrund durch das Scrollen verändert, wohingegen der Cookie-Banner unverändert an seinem Ort im Vordergrund verbleibt; man könnte auch sagen, der Cookie-Banner wandert gewissermaßen beim scrollen mit;
- ein einzelnes sich visuell veränderndes Element, wobei in diesem Fall das einzelne sich visuelle verändernde Element der Analyse zugänglich gemacht wird; und/oder
   ∘ dies hat den Hintergrund, dass es sich bei diesem Element mit einer hohen Wahrscheinlichkeit um den Cookie-Banner handelt;
- ständig sich verändernde visuelle Elemente, wobei in diesem Fall die ständig sich verändernde visuelle Elemente für die Analyse nicht berücksichtigt werden.
   ∘ Verändert sich ein Element ständig visuell, handelt es sich mit hoher Wahrscheinlichkeit beispielsweise um ein Video, eine Werbeeinblendung und/oder ein GIF, welches in vorteilhafter Weise nicht im Hinblick auf die Analyse, ob ein Cookie-Banner vorhanden ist berücksichtigt werden.

Die Aufzeichnungen können gemäß der vorstehend beschriebenen vier Fälle vorgefiltert werden. Zu jeder identifizierten Region, also diejenigen Bereiche, die auch nach dem Filterprozess noch verwendet werden, wird zusätzlich der dazugehörige Zeitstempel gespeichert. Die identifizierten Regionen können auch als Fokus-Regionen bezeichnet werden.

In einem weiteren Schritt werden dann die abgespeicherten identifizierten Regionen und/oder die veränderten Seiteninhalte zusammengeführt und im Hinblick darauf überprüft, ob der Cookie-Banner auf der Internetseite 225 vorhanden ist oder nicht.

Zunächst können den erkannten Fokus-Regionen die entsprechenden Seiteninhalte mithilfe der Zeitstempel zugeordnet werden (vor dem Auftreten der Änderung und nach dem Auftreten).

Danach können die Bildschirmaufzeichnungen, insbesondere die visuellen Änderungen, mit der künstliche Intelligenz 300 dahingehend untersucht werden, ob die Internetseite 225 einen Cookie-Banner aufweist oder nicht. Hierbei gibt die künstliche Intelligenz 300 als Ergebnis der Analyse einen Score aus, der angibt, mit welcher Wahrscheinlichkeit ein Cookie-Banner identifiziert wurde. Liegt der Score über einem anpassbaren Grenzwert, wird davon ausgegangen, dass ein Cookie-Banner erfolgreich identifiziert wurde. Im Hinblick auf eine Schonung der Computerressourcen und einer Reduzierung der falsch positiven Ergebnisse, können anstatt der gesamten Bildschirmaufnahme die vorstehend beschriebenen Fokus-Regionen verwendet werden.

Wurde durch die Analyse mittels der künstlichen Intelligenz 300 noch kein Cookie-Banner identifiziert, kann als weiterer Faktor der protokollierte Seiteninhalt (in der Form von HTML Content) verwendet werden, indem dieser nach Schlagworten durchsucht wird, die in einem Zusammenhang mit einem Cookie-Banner stehen. Solche Schlagwörter können beispielsweise sein "Cookies", "akzeptieren", "ablehnen", "konfigurieren", etc.

In einem weiteren Prozess kann dann das Ergebnis der Analyse dem Betreiber der Internetseite 225 zugänglich gemacht werden, sodass dieser die Cookie-Banner auf die Einhaltung entsprechender Regeln bzw. auf Aktualität hin überprüfen kann.

Das Verfahren ermöglicht es also Internetseiten 225 automatisiert mit technischen Mitteln dahingehend zu untersuchen, ob Cookie-Banner vorhanden sind und entsprechende technische Maßnahmen zu ergreifen, insbesondere für den Fall, dass kein Cookie-Banner wurde.

## Patentansprüche

1. Verfahren zur Identifikation von Cookie-Bannern von zumindest einer Internetseite umfassend die folgenden Schritte:
• Aufrufen der Internetseite vermittels einer Internet-Zugangsschnittstelle;
• Einholen von Informationen, wobei die Informationen eine Darstellung der Internetseite auf einem Bildschirm wiedergeben;
• Analyse der Informationen im Hinblick auf das Vorhandensein eines Cookie-Banners, wobei die Analyse einen Score ausgibt, der wiedergibt mit welcher Wahrscheinlichkeit ein Cookie-Banner auf der Internetseite vorhanden ist;
• Feststellung, dass die Internetseite einen Cookie-Banner aufweist, wenn der Score über einem Grenzwert liegt.

2. Verfahren nach einem der vorhergehenden Ansprüche, **dadurch gekennzeichnet, dass** die Informationen HTML-Daten zum Seitenaufbau und/oder eine visuelle Anzeige der Internetseite umfassen.

3. Verfahren nach einem der vorhergehenden Ansprüche, **dadurch gekennzeichnet, dass** die Internet-Zugangsschnittstelle automatisiert schon durch die Internetseite erfasste Cookies gelöscht und/oder die Internetseite blockiert, wenn die Internetseite keinen Cookie-Banner aufweist.

4. Verfahren nach einem der vorhergehenden Ansprüche, **dadurch gekennzeichnet, dass** einem Unternehmen, das die Internetseite betreibt automatisiert signalisiert wird, wenn die Internetseite keinen Cookie-Banner aufweist, wobei auf einem Server, der die Internetseite verwaltet, ein Algorithmus implementiert ist, der die Internetseite automatisiert abschaltet oder automatisiert einen Cookie-Banner hinzufügt.

5. Verfahren nach einem der Ansprüche 3 bis 4, **dadurch gekennzeichnet, dass** das Blockieren, das Löschen und/oder das Signalisieren nicht ausgeführt wird, wenn es sich bei den Cookies um essenzielle Cookies handelt, wobei die Art der Cookies anhand der HTML-Protokolldaten extrahiert wird.

6. Verfahren nach Anspruch 2, **dadurch gekennzeichnet, dass** die Informationen der visuellen Anzeigen, die der Analyse zugänglich gemacht werden, zumindest folgende Fälle unterscheiden:
• keine visuelle Veränderung der Internetseite, wobei in diesem Fall der komplette visuelle Bereich der Analyse zugänglich gemacht wird;
• ein grafisches Element, dass beim Scrollen der Internetseite an seinem ursprünglichen Ort der Darstellung verbleibt;
• ein einzelnes sich visuell veränderndes Element, wobei in diesem Fall das einzelne sich visuelle verändernde Element der Analyse zugänglich gemacht wird; und/oder
• ständig sich verändernde visuelle Elemente, wobei in diesem Fall die ständig sich verändernde visuelle Elemente für die Analyse nicht berücksichtigt werden.

7. Verfahren nach Anspruch 2, **dadurch gekennzeichnet, dass** die Analyse der Informationen der visuellen Anzeige im Hinblick auf das Vorhandensein eines Cookie-Banners mit einer trainierten künstlichen Intelligenz durchgeführt wird.

8. Verfahren, nach Anspruch 7, **dadurch gekennzeichnet, dass** die künstliche Intelligenz mehrere trainierte KI-Module umfasst, wobei die verschiedenen Kl-Module jeweils mit spezifischen Cookie-Bannern verschiedener Unternehmen trainiert sind.

9. Verfahren nach Anspruch 7, **dadurch gekennzeichnet, dass** die HTML-Protokolldaten im Hinblick auf das Vorhandensein eines Cookie-Banners analysiert werden, wenn der Score des Kl-Modells in einem festlegbaren Bereich unterhalb des Grenzwertes ist.

10. Verfahren nach Anspruch 9, wobei die HTML-Protokolldaten im Hinblick auf Schlagwörter untersucht werden, die im Zusammenhang mit einem Cookie-Banner stehen.

11. Verfahren nach Anspruch 1 oder 9, wobei der Grenzwert und/oder der festlegbare Bereich anpassbar sind.

12. Internet-Zugangsschnittstelle eingerichtet zur Ausführung der Schritte des Verfahrens nach einem der Ansprüche 1-11.

13. Internet-Zugangsschnittstelle nach Anspruch 12, wobei Internet-Zugangsschnittstelle als ein Browser ausgebildet, insbesondere ist die Funktionalität zum Ausführen der Schritte des Verfahrens nach einem der Ansprüche 1-11 durch ein Browser Plug-In realisiert.

14. Rechnereinheit aufweisend eine Internet-Zugangsschnittstelle nach Anspruch 12 und eingerichtet zur Ausführung der Schritte des Verfahrens nach einem der Ansprüche 1-11.

15. Computerprogramm umfassend Befehle, die bei der Ausführung des Programms durch eine Rechnereinheit diese veranlassen, das Verfahren nach Anspruch 1 auszuführen.
